# Europäisches Patentamt

# European Patent Office

# Office européen des brevets

(11) Publication number: **0 067 939**
**B1**

# EUROPEAN PATENT SPECIFICATION

(45) Date of publication of patent specification: **24.07.85**

(21) Application number: **82103293.5**

(22) Date of filing: **20.04.82**

(51) Int. Cl.⁴: **B 23 K 1/08, H 05 K 3/34**

(54) **Soldering apparatus for printed circuit board.**

(30) Priority: **16.06.81 JP 93588/81**

(43) Date of publication of application:
**29.12.82 Bulletin 82/52**

(45) Publication of the grant of the patent:
**24.07.85 Bulletin 85/30**

(84) Designated Contracting States:
**DE FR GB NL**

(56) References cited:
**EP-A-0 055 323**
**FR-A-2 408 974**
**GB-A- 801 510**
**US-A-3 921 888**

(73) Proprietor: **Matsushita Electric Industrial Co., Ltd.**
**1006, Oaza Kadoma**
**Kadoma-shi Osaka-fu, 571 (JP)**

(72) Inventor: **Murakami, Shuichi**
**47-5, Yamanoue 5-chome**
**Hirakata-shi Osaka-fu 573 (JP)**
Inventor: **Matsuda, Chuichi**
**C48-103, Meitoku 1-chome**
**Neyagawa-shi Osaka-fu 572 (JP)**
Inventor: **Wakahata, Tamotsu**
**13-3, Aoyama 3-chome**
**Katano-shi Osaka-fu 576 (JP)**

(74) Representative: **Eisenführ & Speiser**
**Martinistrasse 24**
**D-2800 Bremen 1 (DE)**

Courier Press, Leamington Spa, England.

## Description

The present invention relates to a soldering apparatus for printed circuit boards and in particular to a soldering apparatus for soldering chip type elements or components without lead wires such as resistors, capacitors, etc. onto printed circuit boards, with electrode portions provided at opposite ends of the chip type components being soldered onto conductor portions of the printed circuit boards.

A soldering apparatus for integrated circuit elements of a type where connection terminals extend from one surface of the integrated circuit element is known from FR—A—2 408 974 which soldering apparatus comprises two tanks, one tank for storing a flux means and the other tank for storing molten solder. Both tanks are provided independently but in a certain distance of each other separated by a device for pre-heating the connection terminals. The integrated circuit elements are conveyed on a bulk or the like in a downwardly inclined direction from the first tank containing said flux means to said second tank for storing molten solder.

GB—A—801 510 discloses a soldering apparatus comprising a first container for receiving and storing a quantity of molten solder, which container is heated to a temperature at which the solder is in the molten state. The soldering apparatus further comprises a second container supported with the first container on a common platform and provides a closed chamber having a port connected to a heat-insulated pipe opening into the first container. A liquid-pump is interposed in the liquid pipe and is driven by a suitable means such as an electrical motor. The upper wall or sealing of the second container is apertured fixedly to receive a plurality of hollow tubular solder spout members having the lower ends communicating with a chamber and their upper ends providing open mouth portions of predetermined cross-sectional shape and area for receiving lead wires or electrical circuit conductors of an article to be soldered. The article to be soldered is moved along a path of travel being horizontal to the sealing of the first and second container. Thus, the solder waves for the lead wires or electrical circuit conductors are provided for each of the lead wires to be soldered to individual ones of the hollow tubular solder spout members.

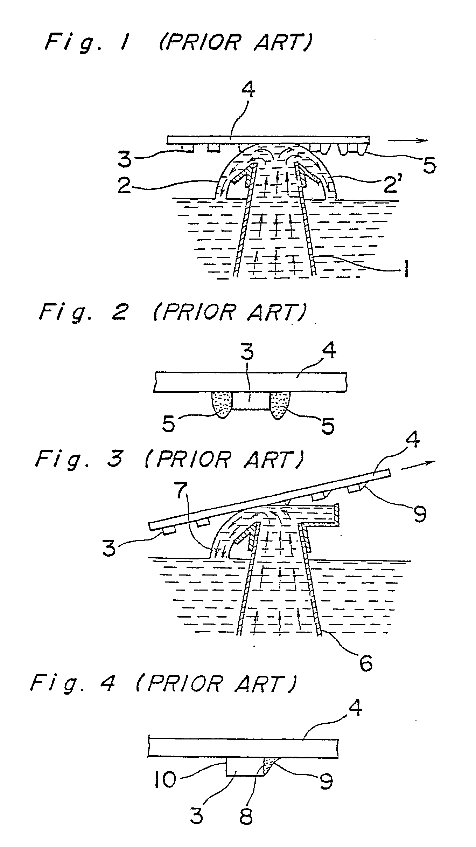

For the soldering of chip type components a spouting type soldering system is known in which molten solder is spouted or applied onto a soldering surface of a printed circuit board during conveyance of the printed circuit board. The known spouting type soldering system as described above is broadly divided into two systems according to configurations of the spouting solder waves, i.e. one system so called as a double direction solder wave spouting type and the other system referred to as a single direction solder wave spouting type as shown in Figs. 1 and 3, respectively.

Both of the conventional soldering systems as described above, however, have serious disadvantages inherent therein. More specifically, in the former double direction solder wave spouting type shown in Fig. 1, two solder waves 2 and 2' are spouted from a nozzle 1 so as to be symmetrical with respect to the nozzle 1, while a printed circuit board 4, on which chip type components 3 are mounted, is conveyed from left to right as indicated by an arrow in the figure. In the above arrangement, however, when the printed circuit board 4 leaves or exits from the solder wave 2', the solder wave 2' flows down in the same direction as conveyance of the printed circuit board 4, so that excessive solder adheres to the chip type component 3 and is cooled rapidly, whereby excessive icicle-shaped solder fillets 5 projecting out of the chip type component 3 are undesirably formed as shown in Fig. 2.

On the other hand, in the latter single direction solder wave spouting type proposed to prevent the formation of the excessive icicle-shaped solder fillets referred to above as shown in Fig. 3, a solder wave 7 flows down from a nozzle 6 from right to left, that is, in a direction opposite to that of conveyance of the printed circuit board, 4 while the circuit board 4 passes through the solder wave 7 along a path inclined upwardly with respect to the direction of conveyance thereof. In the above arrangement, when the circuit board 4 exits from the solder wave 7, the solder wave 7 flows down in the direction opposite to that of conveyance of the circuit board 4, so that excessive solder does not adhere to the chip type component 3 and thus, excessive icicle-shaped solder fillets 5 of the double direction wave spouting type are not formed. In the above arrangement, however, since the solder wave 7 is applied to only one side of the chip type component 3, that is, only in a direction from right to left in Fig. 3, a normal solder fillet 9 not exceeding the height of the chip type component 3 is obtained at a forward portion 8 of the chip type component 3 with respect to the direction of conveyance of the circuit board 4 but no solder fillet is formed (referred to as "dewetting of solder", hereinbelow) at a backward portion 10 of the chip type component 3 as shown in Fig. 4 because gas of flux evaporated during the soldering stays at the backward portion 10 without being removed therefrom by the solder wave 7.

As is seen from the foregoing description, in both of the conventional spouting type soldering systems, faulty soldering such as excessive icicle-shaped solder fillets or dewetting of solder tends to take place, thus undesirably necessitating corrections by manual operations, in which case, there is invited a still more serious problem that the chip type component is liable to be damaged by the local heating applied thereto by a soldering iron to be employed for the repairing, and therefore, it has been strongly required to provide a soldering apparatus for printed circuit boards in which faulty soldering of chip type components is eliminated without necessity for corrections at later stages of the processing.

EP—A—0 055 323 discloses a process and an apparatus for soldering chip type components onto a soldering surface of a printed circuit board wherein the soldering apparatus comprises a first and second solder tank which are provided adjacent to and independently of each other for storing molten solder. A first and a second nozzle are disposed independently of each other in the first and second solder tank for spouting molten solder which may form the respective solder waves. A printed circuit board is passed through the respective solder waves in an upwardly inclined direction from said first nozzle to said second nozzle, whereby the second nozzle is higher in height than the first nozzle such that in turn the second solder wave is higher in height than the first solder wave, the second solder wave flowing in a direction counter to the direction of movement of this printed circuit board. In the known process and apparatus, however, the level of molten solder stored in the first solder tank is approximately equal to the level of molten solder stored in the second solder tank such that the spouting height of the second solder wave from the level in the second solder tank becomes larger than that of the first solder wave from the level in the first solder tank. The difference in spouting heights results in a turbulent flow at the surface of the second solder wave and additionally the second solder wave becomes readily oxidated due to an increase in height of the solder wave from the level in the second solder tank.

Though the apparatus according to EP—A—0 055 323 prevents the formation of excessive icicle-shaped solder fillets projecting out of the chip components on the printed circuit board as well as a so-called "dewetting of solder" at the backward portion of the chip component in the direction of conveyance of the printed circuit board, there is a certain disadvantage in that the excessive icicle-shaped solder fillets resulting from the soldering of the first nozzle are not modified completely all in that solder bridges may appear such that a short-circuit is formed between the electrodes of adjacent chip components on the printed circuit board.

It is an object of the present invention to provide a soldering apparatus for soldering chip type components onto a soldering surface of printed circuit boards wherein turbulences in flow of the solder waves from both the first and second nozzle are restricted to a minimum so as to decrease oxidation of the solder waves, which apparatus is simple in structure and accurate in functioning at high reliability.

In accomplishing this object the soldering apparatus for printed circuit boards comprises a first and second solder tank which are provided adjacent to and independently of each other so as to store molten solder therein, the level of the molten solder, in said second solder tank being disposed higher in height than the level of the molten solder in said first solder tank, a first and a second nozzle which are disposed independently of each other in said first and said second solder tank so as to spout the molten solder in said first and said second solder tank, respectively, so that the molten solder spouted from said first nozzle and said second nozzle may form respective solder waves whereby said second nozzle is disposed higher in height than said first nozzle, and means for conveying said printed circuit board through said first nozzle and second second nozzle sequentially upwardly inclined with respect to the direction of conveyance.

The present invention reduces the turbulence in flow of the solder waves from both the first and second nozzle to a minimum such that the oxidation of the solder waves is effectively decreased. Thus, it is possible to achieve normal soldering of chip components without the necessity for modifications or repairing at later stages of the processing and thus resulting in an accurate functioning at high reliability. The soldering apparatus according to the present invention is simple in structure and can be readily introduced into a production line at low costs.

These and other objects and features of the present invention will become apparent from the following description taken in conjunction with the preferred embodiment thereof with reference to the accompanying drawings, in which;

Fig. 1 is a cross-sectional view of solder waves in a conventional double direction solder wave spouting type soldering system,

Fig. 2 is a fragmentary side elevational view showing, on an enlarged scale, the state of faulty soldering in the system of Fig. 1,

Fig. 3 is a cross-sectional view of a solder wave in a conventional single direction solder wave spouting type soldering system,

Fig. 4 is a fragmentary side elevational view showing, on an enlarged scale, the state of faulty soldering in the system of Fig. 3,

Fig. 5 is a cross-sectional view of solder waves of a soldering apparatus according to one preferred embodiment,

Fig. 6 is a view similar to Fig. 5, showing a modification thereof,

Fig. 7 is a fragmentary side elevational view showing, on an enlarged scale, the state of normal soldering by the soldering apparatus and

Fig. 8 is a cross-sectional view of solder waves of a soldering apparatus previously developed.

Before the description proceeds, it is to be noted that like parts are designated by like reference numerals throughout several views of the accompanying drawings.

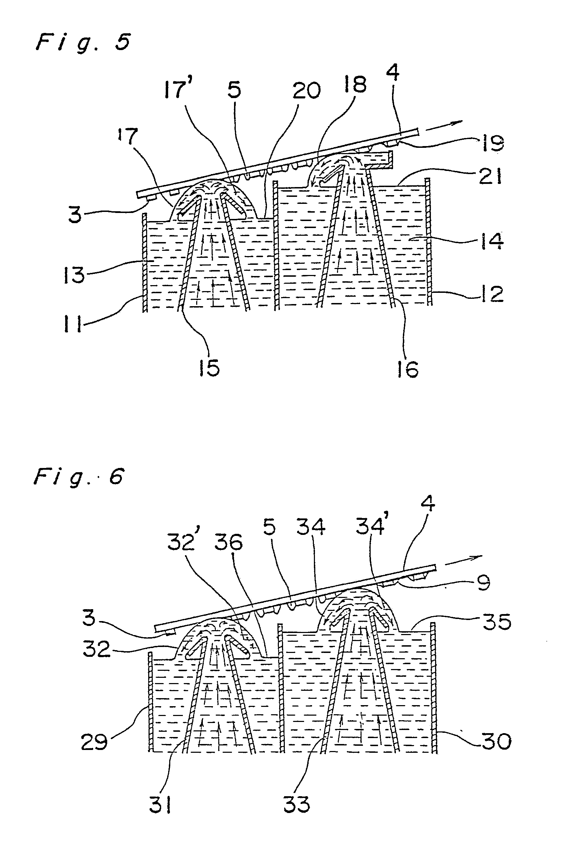

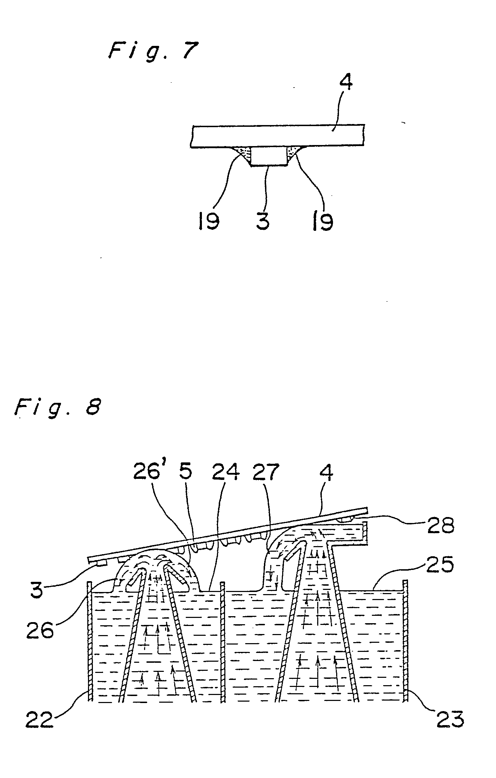

Referring now to the drawings, there are shown in Fig. 5, solder waves of a soldering apparatus according to one preferred embodiment. The soldering apparatus generally includes a first nozzle 15 for spouting first molten solder 13 stored in a first solder tank 11 and a second nozzle 16 for spouting second molten solder 14 stored in a second solder tank 12, with the first solder tank 11 and the second solder tank 12 being provided adjacent to and independently of each other. A printed circuit board 4 is passed through the first nozzle 15 and second nozzle 16 sequentially in a direction indicated by an arrow in the figure so as to be inclined upwardly with respect to a direction of conveyance of the printed circuit board 4. Since firstly, the printed circuit board 4 is passed through the first nozzle 15 from which solder waves 17 and 17' are spouted approximately symmetrically with respect to the first nozzle 15, excessive icicle-shaped solder fillets 5 shown in Fig. 2 are formed as in the case of the conventional double direction solder wave spouting type soldering system of Fig. 1. Since the printed circuit board 4 is, then, passed through the second nozzle 16 from which a solder wave 18 flows down in a direction opposite to that of conveyance of the printed circuit board 4 in the same manner as the conventional single direction solder wave sputing type soldering system of Fig. 3, excessive portions of the excessive icicle-shaped solder fillets 5 are scraped off by the solder wave 18 so that normal solder fillets 19 may be finally formed as shown in Fig. 7. In the above arrangement, since the printed circuit board 4 is conveyed so as to be inclined upwardly with respect to the direction of conveyance of the printed circuit board 4, the second nozzle 16 is disposed higher in height than the first nozzle 15 and a level 21 of the second molten solder 14 stored in the second solder tank 12 is disposed higher than a level 20 of the first molten solder 13 stored in the first solder tank 11 so that a spouting height of the solder waves 17 and 17' from the level 20 and that of the solder wave 18 from the level 21 may be restricted to a minimum and made approximately equal. The minimized spouting height of the solder waves 17, 17' and 18 results in decrease not only in turbulence in flow of the solder waves but also in head of the solder waves, thus minimizing oxidation of the solder waves.

On the other hand, as shown in Fig. 8, in the case where a level 24 of molten solder stored in a first solder tank 22 is approximately equal to a level 25 of molten solder stored in a second solder tank 23, a spouting height of a solder wave 27 from the level 25 becomes larger than that of solder waves 26 and 26' from the level 24, so that the solder wave 27 flows turbulently at the surface thereof and becomes readily oxidated due to increase in head of the solder wave 27 from the level 24. As a result, the excessive icicle-shaped solder fillets 5 by the solder wave 26 and 26' of the first solder tank 22 are not modified completely or a so-called "solder bridge", i.e., a defect that a short-circuit is formed between electrodes of adjacent chip type components occurs by the solder wave 27 of the second solder tank 23, so that defective solder fillets 28 are finally formed at the chip type component 3 of the printed circuit board 4 with a consequent economic loss such as increase in oxidation of the solder wave 27.

Meanwhile, in the arrangement shown in Fig. 5, turbulence in flow of the solder waves 17 and 17' from the first nozzle 15 and the solder wave 18 from the second nozzle 16 is restricted to a minimum so as to decrease oxidation of the solder waves 17, 17' and 18, whereby it becomes possible to achieve normal soldering of chip type components without necessity for modifications or repairing at later stages of the processing. In the above arrangement, although the configuration of the solder waves 17 and 17' from the first nozzle 15 is different from that of the solder wave 18 from the second nozzle 16, the same effect as referred to above can be achieved by an arrangement in which solder waves from the second nozzle 16 have the same configuration as the solder waves 17 and 17' from the first nozzle 15. Namely, as shown in Fig. 6, approximately symmetrical solder waves 32 and 32' are spouted from the first nozzle 31 in a first solder tank 29 so as to flow down to backward and forward portions of the first nozzle 31 with respect to a direction of conveyance of the printed circuit board 4, respectively. Likewise, approximately symmetrical solder waves 34 and 34' are spouted from a second nozzle 33 in a second solder tank 30 so as to flow down to backward and forward portions of the second nozzle 33 with respect to the direction of conveyance of the printed circuit board 4. In the above arrangement of Fig. 6, the second nozzle 33 is disposed higher in height than the first nozzle 31 and a level 35 of molten solder stored in the second solder tank 30 is disposed higher than a level 36 of molten solder in the first solder tank 29 in the same manner as the arrangement of Fig. 5. It is to be noted that the solder waves 32 and 32' from the first nozzle 31 are spouted so high as to dip more than half of a thickness of the printed circuit board 4 and the solder waves 34 and 34' from the second nozzle 33 are spouted so low as to come into contact with a lower surface of the printed circuit board 4, so that excessive portions of the excessive icicle-shaped solder waves 5 formed by the solder waves 32 and 32' from the first nozzle 31 are scraped off by the solder waves 34 and 34' from the second nozzle 33, whereby normal solder fillets 9 are finally formed in the same manner as the arrangement of Fig. 5.

Meanwhile, in the arrangements of Figs. 5 and 6, since the first and second solder tanks disposed adjacent to each other are provided with a first pump device and a second pump device, respectively, it is possible to change the spouting heights of the solder waves from the levels of the molten solder in the first solder tank and the second solder tank, respectively with much ease so as to obtain optimum spouting heights of the solder waves corresponding to an inclination angle of conveyance of the printed circuit board 4.

As is clear from the foregoing description, it becomes possible to achieve normal soldering of chip type components onto printed circuit boards without necessity for corrections or repairing at later stages of the processing, whereby necessity for a great amount of manual work hitherto required for the corrections and consequently, damage of chip type components by manual repairing operations have been eliminated.

## Claims

1. A soldering apparatus for printed circuit boards comprising:
a first and a second solder tank (11, 12; 29, 30) which are provided adjacent to and independently of each other so as to store molten solder therein,
the level (21; 35) of the molten solder (14), in said second solder tank (12; 30) being disposed higher in height than the level (20; 36) of the molten solder (13) in said first solder tank (11; 29),
a first and a second nozzle (15, 16; 31, 33) which are disposed independently of each other in said first and said second solder tank (11, 12; 29, 30) so as to spout the molten solder in said first and second solder tank (11, 12; 29, 30), respectively, so that the molten solder spouted from said first nozzle (15; 31) and said second nozzle (16; 33) may form respective solder waves (17, 18; 32, 34) whereby said second nozzle (16; 33) is disposed higher in height than said first nozzle (15; 31),
and means for conveying said printed circuit board (4) through said first nozzle (15; 31) and said second nozzle (16; 33) sequentially upwardly inclined with respect to the direction of conveyance.

2. A soldering apparatus as claimed in claim 1, wherein said first nozzle (15) spouts two approximately symmetrical solder waves (17, 17') so that two approximately symmetrical solder waves (17, 17') may flow down to forward and backward portions of said first nozzle (15) with respect to the direction of conveyance of said printed circuit board (4), and that said second nozzle (16) spouts a solder wave (18) in a direction opposite to that of conveyance of the printed circuit board (4).

3. A soldering apparatus as claimed in claim 1, wherein both of said first nozzle (31) and said second nozzle (33) spout two approximately symmetrical solder waves (32, 32'; 34, 34') so that said two approximately symmetrical solder waves (32, 32'; 34, 34') may flow down to forward and backward portions of said first nozzle (31) and said second nozzle (33) with respect to a direction of conveyance of said printed circuit board (4), respectively.

4. A soldering apparatus as claimed in any of the preceding claims, wherein a first pump device and a second pump device are connected independently of each other to said first and second solder tank (11, 29; 12, 30) so as to supply the molten solder (13, 14) to said first nozzle (15, 31) and said second nozzle (16; 33), respectively.

5. A soldering apparatus as claimed in claim 4, wherein said solder waves (17, 17'; 32, 32') from the level (20, 36) of the molten solder (13) in said first solder tank (11; 29) are spouted so high as to dip more than half of the thickness of the printed circuit board (4) whereas said solder waves (18, 34, 34') from the level (21; 35) of the molten solder (14) in said second solder tank (12; 30) are spouted so low as to come into contact with a lower surface of the printed circuit board (4).

## Patentansprüche

1. Lötapparat für gedruckte Schaltungsplatinen mit einem ersten und zweiten Lotbehälter (11, 12; 29, 30), die nebeneinander und unabhängig voneinander angeordnet sind und geschmolzenes Lot speichern, wobei der Pegel (21; 35) des geschmolzenen Lotes (14) in dem zweiten Lotbehälter (12; 30) höher ist als der Pegel (20; 36) des geschmolzenen Lotes (13) in dem ersten Lotbehälter (11; 29),
mit einer ersten und einer zweiten Düse (15, 16; 31, 33), die unabhängig voneinander in dem ersten und zweiten Lotbehälter (11, 12; 29, 30) angeordnet sind und geschmolzenes Lot in den ersten bzw. zweiten Lotbehälter (11, 12; 29, 30) spritzen, so daß das von der ersten Düse (15; 31) und der zweiten Düse (16; 33) herausgespritzte Lot entsprechende Lotwellen (17, 18; 32, 34) bildet, wobei die Düsenöffnung der zweiten Düse (16; 33) höher angeordnet ist als die der ersten Düse (15; 31),
und mit einer Vorrichtung, die die gedruckte Schaltungsplatine (4) nacheinander und in Bezug auf die Transportrichtung aufwärtsgeneigt über die erste Düse (15; 31) und zweite Düse (16; 33) transportiert.

2. Lötapparat nach Anspruch 1, dadurch gekennzeichnet, daß die erste Düse (15), zwei ungefähr symmetrische Lotwellen (17, 17') ausspritzt, so daß zwei angenähert symmetrische Lotwellen (17, 17') zum vorderseitigen und rückseitigen Abschnitt der ersten Düse (15) in Bezug auf die Transportrichtung der gedruckten Schaltungsplatine (4) herabfließen und daß die zweite Düse (16) eine Lotwelle (18) in Richtung entgegengesetzt zur Transportrichtung der gedruckten Schaltungsplatine (4) ausspritzt.

3. Lötapparat nach Anspruch 1, dadurch gekennzeichnet, daß sowohl die erste Düse (31) als auch die zweite Düse (33) zwei angenähert symmetrische Lotwellen (32, 32'; 34, 34') ausspritzen, so daß die zwei angenähert symmetrischen Lotwellen (32, 32'; 34, 34') zu vorderseitigen und rückseitigen Abschnitten der ersten Düse (31) und der zweiten Düse (33) in Bezug auf die Transportrichtung der gedruckten Schaltungsplatine (4) herabfließen.

4. Lötapparat nach einem der vorstehenden Ansprüche, dadurch gekennzeichnet, daß eine erste Pumpvorrichtung und eine zweite Pumpvorrichtung unabhängig voneinander mit dem ersten und zweiten Lotbehälter (11, 29; 12, 30) verbunden sind und geschmolzenes Lot (13, 14) der ersten Düse (15; 31) bzw. der zweiten Düse (16; 33) zuführen.

5. Lötapparat nach Anspruch 4, dadurch gekennzeichnet, daß die Lotwellen (17, 17'; 32, 32') vom Pegel (20; 36) des geschmolzenen Lotes (13) im ersten Lotbehälter (11; 29) so hoch ausgespritzt werden, daß mehr als die Hälfte der Dicke der gedruckten Schaltungsplatine (4) eingetaucht wird, während die Lotwellen (18; 34, 34') vom Pegel (21; 35) des geschmolzenen Lotes (14) im zweiten Lotbehälter (12; 30) so niedrig ausgespritzt werden, daß sie mit der Unterfläche der gedruckten Schaltungsplatine (4) in Berührung kommen.

**Revendications**

1. Appareil de soudage pour plaquettes à circuits imprimés comprenant:

— une première et une seconde cuve de soudure (11, 12; 29, 30) qui sont placées côte à côte et indépendamment l'une de l'autre de manière à stocker de la soudure à l'état fondu, le niveau (21; 35) de la soudure à l'état fondu (14) dans la seconde cuve de soudure (12; 30) étant situé à une hauteur plus élevée que le niveau (20; 36) de la soudure à l'état fondu (13) dans la première cuve de soudure (11; 29);

— un premier et un second ajutage (15, 16; 31, 33) qui sont disposés indépendamment l'un de l'autre dans la première et la seconde cuve de soudure (11, 12; 29, 30) de manière à déverser la soudure à l'état fondu dans les première et seconde cuves de soudure (11, 12; 29, 30), respectivement, de façon que la soudure à l'état fondu sortant du premier adjutage (15; 31) et du second ajutage (16; 33) puisse former respectivement des ondes de soudure (17, 18; 32, 34) d'où il résulte que le second ajutage (16; 33) est situé à une hauteur plus élevée que le premier ajutage (15; 31),

— et un moyen pour acheminer la plaquette à circuits imprimés (4) à travers le premier ajutage (15; 31) et le second ajutage (16; 33) successivement dans la direction du haut en étant inclinée s'agissant du sens d'acheminement.

2. Appareil de soudage selon la revendication 1, caractérisé en ce que le premier ajutage (15) décharge deux ondes de soudure approximativement symétriques (17, 17') de façon que les deux ondes de soudure approximativement symétriques (17, 17') se propagent vers le bas dans la

direction de parties avant et arrière du premier ajutage (15) par rapport au sens d'acheminement de la plaqeutte à circuits imprimés (4), et le second ajutage (16) décharge une onde de soudure (18) dans une direction opposée à la direction d'acheminement de la plaquette à circuits imprimés (4).

3. Appareil de soudage selon la revendication 1, caractérisé en ce que le premier ajutage (31) et le second ajutage (33) déchargent deux ondes de soudure approximativement symétriques (32, 32'; 34, 34') de sorte que les deux ondes de soudure approximativement symétriques (32, 32', 34, 34') puissent se propager vers le bas dans la direction de parties avant et arrière du premier ajutage (31) et du second ajutage (33) par rapport au sens d'acheminement de la plaquette à circuits imprimés (4), respectivement.

4. Appareil de soudage selon l'une quelconque des revendications précédentes, caractérisé en ce qu'un premier dispositif de pompage et un second dispositif de pompage sont branchés indépendamment l'un de l'autre aux première et seconde cuves de soudure (11, 29; 12, 30) de manière à fournir la soudure à l'état fondu (13, 14) au premier ajutage (15, 31) et au second ajutage (16; 33) respectivement.

5. Appareil de soudage selon la revendication 4, caractérisé en ce que les ondes de soudure (17, 17'; 32, 32') provenant du premier niveau (20; 36) de la soudure à l'état fondu (13) dans la première cuve de soudure (11; 29) sont déchargées d'une hauteur si élevée qu'elles se propagent vers le bas sur plus de la moitié de l'épaisseur de la plaquette à circuits imprimés (4) alors que les ondes de soudure (18; 34, 34') provenant du niveau (21; 35) de la soudure à l'état fondu (14) de la seconde cuve de soudure (12; 30) sont déchargées d'une hauteur si basse qu'elles viennent en contact avec une surface inférieure de la plaquette à circuits imprimés (4).

0 067 939

Fig. 1 (PRIOR ART)

Fig. 2 (PRIOR ART)

Fig. 3 (PRIOR ART)

Fig. 4 (PRIOR ART)

1

*Fig. 5*

*Fig. 6*

*Fig. 7*

*Fig. 8*